Europäisches Patentamt

European Patent Office

Office européen des brevets

(11) Publication number: **0 154 226**
**A1**

# (12) EUROPEAN PATENT APPLICATION

(21) Application number: **85101625.3**

(22) Date of filing: **14.02.85**

(51) Int. Cl.⁴: **B 25 J 9/16**

(30) Priority: **15.02.84 JP 24969/84**

(43) Date of publication of application:
**11.09.85 Bulletin 85/37**

(84) Designated Contracting States:
**DE FR GB**

(71) Applicant: HITACHI CONSTRUCTION MACHINERY CO., LTD.
6-2, Ohtemachi-2-chome
Chiyoda-ku Tokyo 100(JP)

(72) Inventor: Arima, Yukio
6-206, Chiyoda-House, 1828, Niihari
Chiyodamura Niihari-gun Ibaraki-ken(JP)

(72) Inventor: Ikeda, Toshimichi
531-285, Tsutsujigaoka Ushikumachi
Inashiki-gun Ibaraki-ken(JP)

(72) Inventor: Konomura, Yasushi
6-401, Chiyoda-House 1828, Niihari
Chiyodamura Niihari-gun Ibaraki-ken(JP)

(74) Representative: Patentanwälte Beetz sen. - Beetz jun.
Timpe - Siegfried - Schmitt-Fumian
Steinsdorfstrasse 10
D-8000 München 22(DE)

(54) Teaching playback system.

(57) A teaching playback system including an arm member (11) having at least one movable portion (14, 16, 18, 20, 22) for handling a workpiece, sensor means (23) for sensing the amount of work done by the movable portion, an arithmetic and logical unit (24) for doing calculation based on the amount of work done by the movable portion, a memory (25) connected to the arithmetic and logical unit, and a teaching unit (27) connected to the arithmetic and logical unit for teaching same to perform the sensing of the amount of work done by the movable portion, the operation of the arm member being continued in accordance with the amount of work done by the movable portion when teaching is performed by the teaching unit. The teaching playback system further includes intervals setting means (28) connected to the arithmetic and logical unit for setting a spacing interval between one operation target position of the arm member and another operation target position thereof, and number setting means (29) connected to the arithmetic and logical unit for setting the number of operations performed by the arm member, the arithmetic and logical unit being operative, when taught by the teaching unit, to calculate an operation target position based on the amount of work done by the movable portion of the arm member and a spacing interval set by the intervals setting means, whereby the movable portion can be actuated based on the operation target position to cause the arm member to perform operations repeatedly a number of times set by the number setting means.

./...

FIG.8

## TEACHING PLAYBACK SYSTEM

BACKGROUND OF THE INVENTION

This invention relates to a teaching playback system suitable for use with a machine, such as a robot designed to move and place an article in a predetermined position.

One type of teaching playback system known in the art comprises an arm member having at least one movable portion for handling a workpiece which is an article to be transported, sensor means for sensing the amount of work done by the movable portion, an arithmetic and logical unit for performing a predetermined operation based on the amount of work sensed by the sensing means, a memory connected to the arithmetic and logical unit, and a teaching unit connected to the arithmetic and logical unit to teach same to sense the amount of work done by the movable portion of the arm member, the operation of the arm member being continued in accordance with the amount of work done by the movable portion when teaching is performed by the teaching unit.

In this type of teaching playback system of the prior art, it is necessary to store in the memory the postures of the movable portions of a number corresponding to the number of the positions where workpieces are to be placed, to cause one cycle of operations to be performed, for reasons subsequently to be described more in detail by referring to the drawings. This means that it is necessary to perform teaching operations in a number which corresponds to the number of the workpieces to be handled. Thus, the teaching playback system of the prior art has suffered the disadvantage that it is time-consuming to perform one cycle of operation and difficulties are experienced in improving operation efficiency. This disadvantage becomes more marked as the number of workpieces to be handled increases.

In this type of teaching playback system, the number of teaching operations to be performed or the number of operation targets for performing playback operations which involves the most important function of the system is decided by dividing the capacity of a memory area for the teaching data in the memory by the number of units of data in the memory used for performing one teaching operation. However, since the number of units of data in the memory used for performing one teaching operation is great, limitations are placed on the number of operation targets by the memory capacity, making it impossible to improve the work storing function of the teaching playback system.

SUMMARY OF THE INVENTION

This invention has been developed for the purpose of obviating the aforesaid disadvantages of the prior art. Accordingly, the invention has as its object the provision of a teaching playback system which requires a short period of time for performing one cycle of operations and which is capable of eliminating limitation placed on the number of operation targets by the memory capacity.

According to the invention, there is provided a teaching playback system comprising an arm member having at least one movable portion for handling workpieces or articles to be moved and placed in predetermined positions, sensor means for sensing the amount of work done by the movable portion, an arithmetic and logical unit for performing a predetermined operation based on the amount of work sensed by the sensor means, and a teching unit connected to the arithmetic and logical unit and teaching same to perform the sensing of the amount of work done by the movable portion, the operation of the arm member being continued in accordance with the amount of work done by the movable portion when teaching is performed by the teaching unit, wherein the improvement comprises intervals setting means connected to the arithmetic and logical unit for setting a spacing interval between one operation target position of the arm member and another operation target position thereof, and number setting means connected to the arithmetic and logical unit for setting the number of operations repeatedly performed by the arm member, said arithmetic and logical unit being operative when taught by the teaching unit to calculate an operation target position based on the amount of work done by the movable portion of the arm member and a spacing interval set by the intervals setting means, whereby the movable portion can be actuated based on the operation target position to cause the arm member to perform operations repeatedly a number of times set by the number setting means.

BRIEF DESCRIPTION OF THE DRAWINGS

Fig. 1 is a perspective view of an arm member constituting an operation section incorporating therein one embodiment of the teaching playback system in conformity with the invention;

Fig. 2 is a plan view of the arm member shown in Fig. 1, showing its construction;

Fig. 3 is a side view of the arm member shown in Fig. 1, showing its construction;

Fig. 4 is a view in explanation of the relative positions of the arm member and the workpieces that are articles to be transported shown in Fig. 1;

Fig. 5 is a view in explanation of the operation of the essential portions of the arm member shown in Fig. 1, showing the operation by using an x - y coordinate system and a cylindrical coordinate system;

Fig. 6 is a block diagram of a control mechanism provided to a teaching playback system of the prior art;

Fig. 7(a) is a flow chart showing the control procedures performed by the control mechanixm shown in Fig. 6;

Fig. 7(b) is a view in explanation of a memory area for teaching date provided to a memory of the control mechanism shown in Fig. 6;

Fig. 8 is a block diagram of the control mechanism of the one embodiment of the teaching playback system in conformity with the invention; and

Fig. 9 is flow chart showing the control procedures performed by the control mechanism shwon in Fig. 8.

DESCRIPTION OF THE PREFERRED EMBODIMENT

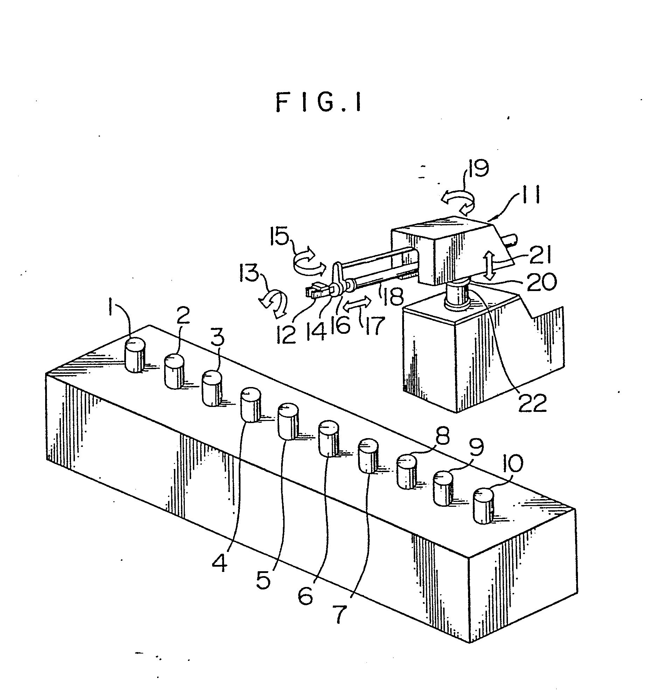

Fig. 1 shows an arm member 11 constituting an operation section incorporating therein one embodiment of the teaching playback system in conformity with the invention.

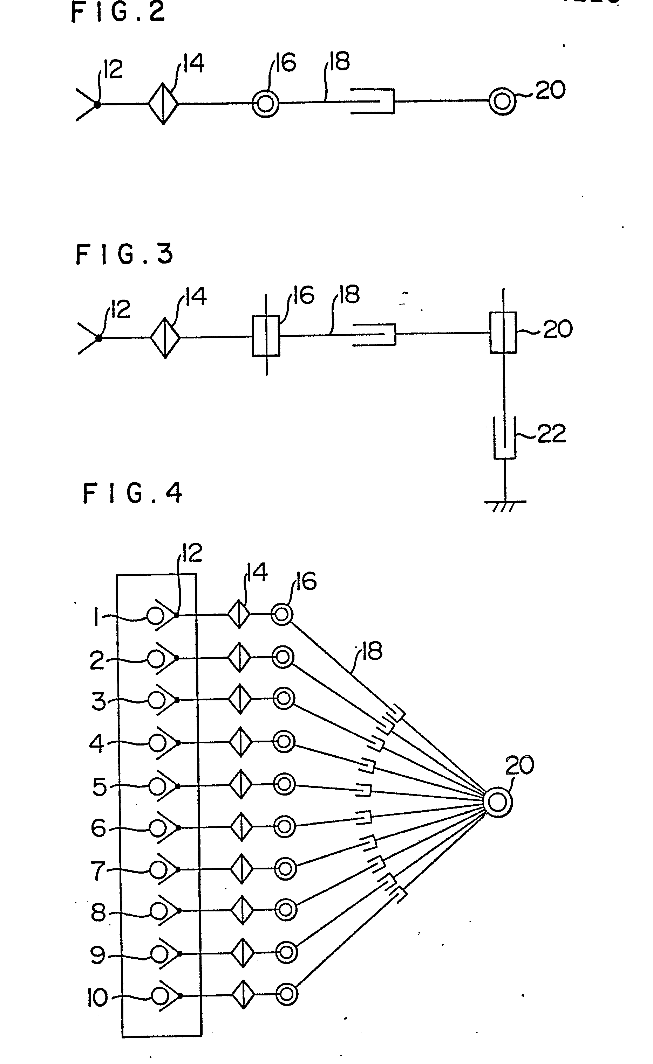

In Fig. 1, there are shown ten (10) workpieces 1-10 which are articles to be transported that have been moved by the arm member 11 and placed in predetermined positions. As shown in Figs. 2 and 3, the arm member 11 comprises a gripper 12 capable of gripping each of the workpieces 1-10 and releasing same, a rotating portion 14 which rotates the gripper 12 in the directions of arrows 13 in Fig. 1, a rotating portion 16 for rotating the rotating portion 14 in the direction of arrows 15 in Fig. 1, a cylinder 18 for moving the rotating portion 16 in the directions of arrows 17 in Fig. 1, a rotating portion 20 for rotating the cylinder 18 in the directions of arrows 19 in Fig. 1 and a cylinder 22 for elevating the rotating portion 20 as indicated by arrows 21 in Fig. 1.

Although not shown, the gripper 12 is connected to means for opening and closing same by hydraulic pressure, and the rotating portions 14, 16 and 20 are each connected to a gearing transmitting a motive force from a motor, for example. The cylinders 18 and 22 are constructed such that they are hydraulically actuated to move in telescopic movement.

To enable the invention to be clearly understood, a teaching playback system of the prior art incorporated in the arm member 11 will first be outlined, so that the problems with which the teaching playback system of the prior art is faced with can be presented.

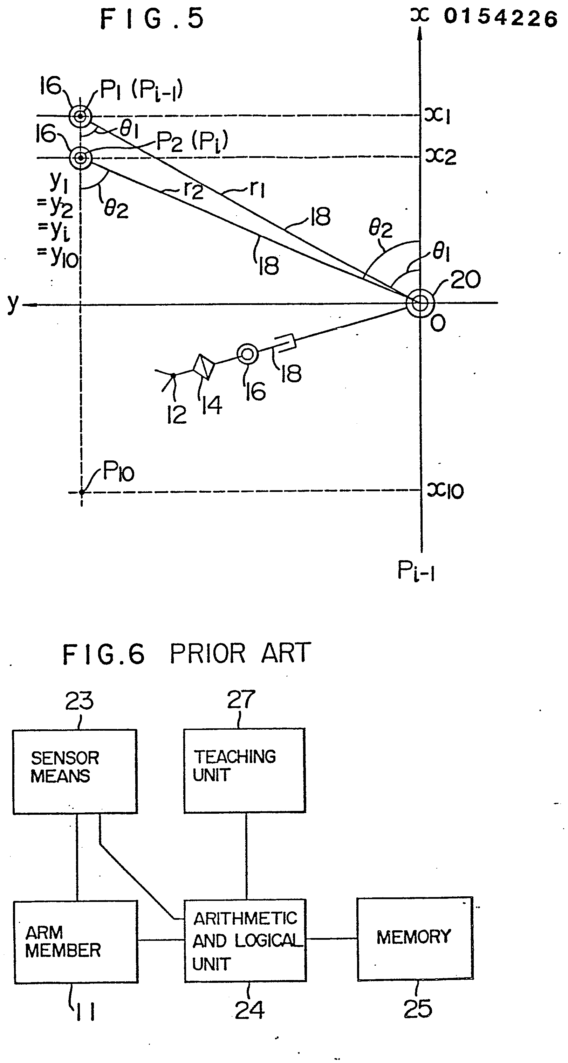

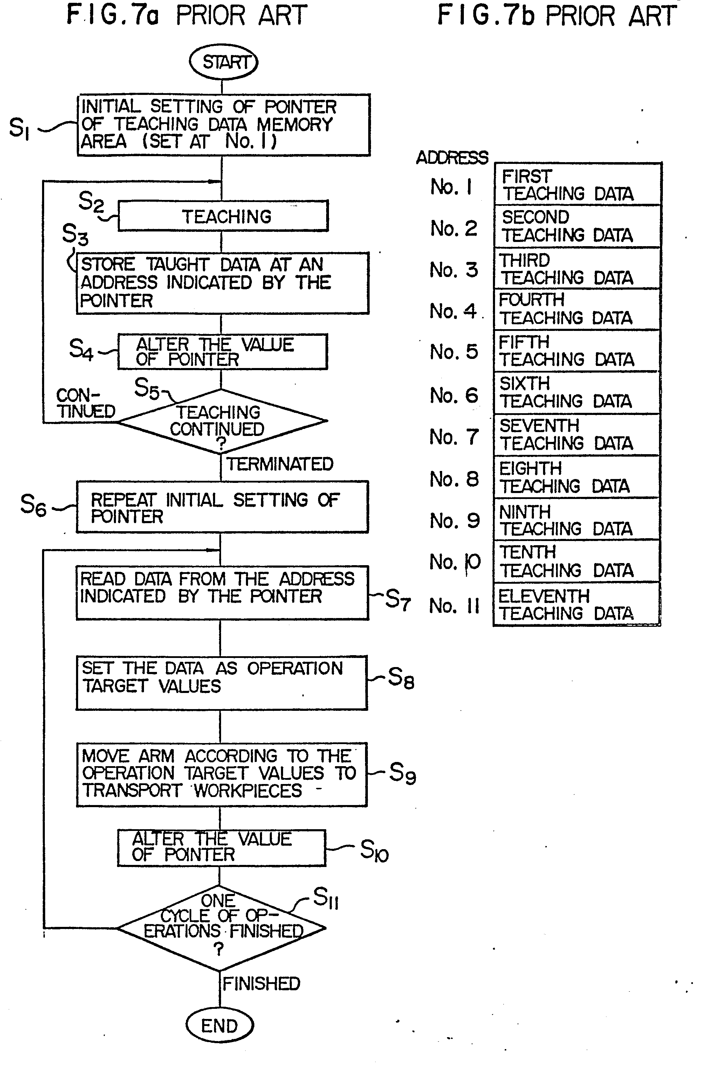

As shown in Fig. 6 which is a block diagram of the control mechanism, sensor means 23 for sensing the amount of work done is connected to each of the movable portions of the arm member 11 or the rotating portions 14, 16 and 20 and cylinders 18 and 22, for example. The sensor means 23 for the rotating portions 14, 16 and 20 and for the cylinders 18 and 22 are angle sensors for sensing the rotational angle and stroke sensors for sensing the stroke, respectively. In Fig. 6, the reference numeral 24 designates an arithmetic and logical unit which is operative to perform a predetermined arithmetic operation based on a necessary amount of work done of all the amounts of work done by the rotating portions 14, 16 and 20 and cylinders 18 and 22, or an arithmetic operation for converting an x - y coordinate system to a cylindrical coordinate system as subsequently to be described, for example, and a logical operation. The reference numeral 25 designates a memory connected to the arithmetic and logical unit and provided with a teaching data memory area 26 having, as shown in Fig. 7(b), No. 1 to No. 11 addresses for storing the amounts of work to be done by the movable portions of the arm member 11 or teaching data. The arithmetic and logical unit 24 and memory 25 may be constituted by a microcomputer, for example. The numeral 27 designates a teaching unit connected to the arithmetic and logical unit 24 for performing teaching to sense the amount of work done by each of the movable portions of the arm member 11 and outputs a teaching signal to the arithmetic and logical unit 24.

One cycle of operations performed by the teaching playback system of the prior art constructed as aforesaid will be described by referring to Fig. 7(a). First of all, teaching operations are performed from step S1 through step S5, and then playback operations are performed from step S6 through step S11.

In step S1, a pointer for the teaching data memory area located in the arithmetic and logical unit 24 is initially set so as to store at a predetermined address the amount of work done by the rotating portion 20 of all the movable portions of the arm member 11 and the amount of work done by the cylinder 18. That is, the pointer is set at an address No. 1. Then, in step S2, the arm member 11 is moved to a position shown in Fig. 4 in which a workpiece 1 is to be placed while the arm member 11 is in a condition in which it does not grip a workpiece. That is, the arm member 11 is moved in such a manner that the rotating portion 16 moves to a position $P_1$ as shown in Fig. 5. Thereafter, the teaching unit 27 is actuated to output a teaching signal to the arithmetic and logical unit 24. Based on this teaching signal, the arithmetic and logical unit 24 gives instructions so that data in the aforesaid condition including the teaching data noted hereinabove or the rotational angles of the rotating portions 14, 16 and 20 and the strokes of the cylinders 18 and 22 will be sensed by the sensor means 23.

The operation shifts to step S3 in which the teaching data of the data obtained in step S2 are forwarded to the arithmetic and logical unit 24 so that such data will be stored, as indicated by the pointer of the arithmetic and logical unit 24, at the address No. 1 of the teaching data memory area 26 as a first set of teaching data. Another set of data or the rotational angle of the rotating portion 14 and the stroke of the cylinder 22 is stored in an area separate from the teaching data memory area 26 of the memory 25. In the case described hereinabove, the position $P_1$ of the rotating portion 16 is designated by $(x_1, y_1)$ in the x - y coordinate system and a cylindrical coordinate system having its origin O at the rotating portion 20 as shown in Fig. 5, and a rotational angle $\theta_1$ of the rotating portion with respect to the x-axis is designated by a total length $\gamma_1$ obtained from the stroke of the cylinder 18. Thus, the following relation holds:

$$x_1 - \gamma_1 \cos \theta_1 \quad \ldots\ldots\ldots\ldots\ldots \quad (1)$$
$$y_1 - \gamma_1 \sin \theta_1 \quad \ldots\ldots\ldots\ldots\ldots \quad (2)$$

Therefore, calculation is done on the equations (1) and (2) by the arithmetic and logical unit 24 based on the rotational angle $\theta_1$ obtained by the sensor means 23 and the total length $\gamma_1$ of the cylinder 18 determined by the stroke thereof, to obtain values of $(x_1, y_1)$. The values of $(x_1, y_1)$ obtained in this way are stored as the first set of teaching data at the address No. 1 in the teaching data memory area 26.

With regard to other data, the rotational angle of the rotating portion 14 and the stroke of the cylinder 22 are constant at all times when workpiece 1 $\sim$ 10 is moved, and they are sotred in the memory 25 as a rotational angle $\alpha$ and a stroke $\ell$, for example. With regard to the rotational angle of the rotating portion 16, an angle formed by a shaft extending through the center of the rotating portion 16 as shown in Fig. 5 and disposed parallel to the x-axis may be considered to be the rotational angle of the rotating portion 16. According to this reasoning, this angle can be considered to be included in the first set of teaching data because it is equal at all times to an angle $\theta_i$ (i = 1 $\sim$ 10) formed .

by the cylinder 18 with respect to the x-axis. Therfore, it will not be necessary to store the rotational angle of the rotating portion 16 in the memory 25.

In step S4, the value of the pointer is altered to one which indicates an address at which the next teaching data should be stored in the teaching data memory area 26. That is, the pointer is set at an address No. 2. Then, in step S5, it is judged whether or not the teaching operation should be continued. Since the teaching operation is not finished yet, the operation returns to step S2 in which the arm member 11 is moved to the position of the workpiece 2 in Fig. 4 or the rotating portion 16 of the arm member 11 is moved to a position $P_2$ as shown in Fig. 5. Then the rotational angle of the rotating portion 20 and the stroke of the cylinder 18 are sensed by the sensor means 23.

The operation shifts to step S3 in which calculation is done by the arithmetic and logical unit 24 on the data obtained in step S2 and the results are stored as a second set of teaching data at the address indicated by the pointer of the arithmetic and logical unit 24 or the address No. 2 of the area 26. In this case, calculation is done by the arithmetic and logical unit 24 on $x_2 = \gamma_2 \cos \theta_2$ and $y_2 = \gamma_2 \sin \theta_2$ based on $\theta_2$ and $\gamma_2$. The values $(x_2, y_2)$ obtained are stored at the address No. 2 of the area 26.

In step S4, the value of the pointer is altered, and it is set at an address No. 3. In step S5, it is judged whether or not the teaching operation is finished. Since the teaching operation is not finished yet, the operation returns to step S2. In this way, a similar process is repeatedly performed until the tenth set of teaching data is stored in the memory 25 from step S2 through step S5.

After the tenth set of teaching data is stored at an address No. 10 of the area 26, teaching data indicating the termination of the teaching operation are stored at an address No. 11 of the area 26. Thus, the teaching operation is finished and a playback operation commences.

In step S6, a pointer for the teaching data memory area 26 is initially set to obtain from the area 26 those data which are necessary to perform a first playback operation. That is, the address No. 1 is again indicated by the pointer.

In step S7, data for calculating an operation target position or the first set of teaching data $(x_1, y_1)$ is fed from the address No. 1 of the area 26 indicated by the pointer into the arithmetic and logical unit 24. Then, in step S8, the arithmetic and logical unit does calculation to change the coordinates $(x_1, y_1)$ to cylindrical coordinates by the following equations:

$$Y_1 = \sqrt{x_1{}^2 + y_1{}^2} \quad \ldots\ldots\ldots\ldots\ldots\ldots \quad (3)$$

$$\theta_1 = \sqrt{\alpha\gamma c \tan y_1/x_1} \quad \ldots\ldots\ldots\ldots\ldots \quad (4)$$

The coordinates $(\gamma_1, \theta_1)$ obtained in this way represent an operation target value or an operation target position corresponding to the position $P_1$.

The operation shifts to step S9 in which the arighmetic and logical unit 24 produces instructions to cause the gripper 12 of the arm member 11 to grip the workpiece 1 and rotate the rotating portion 14 through a rotational angle which has the value $\alpha$ noted hereinabove while driving the cylinder 22 in a stroke which has the value $\ell$, to rotate the rotating portions 20 and 16 through a rotational angle which has the value $\theta_1$ obtained by the equation (4) and to drive the cylinder 18 in a stroke which has the value $\gamma_1$ obtained by the equation (3), with a result that the rotating portion 16 of the arm member 11 moves to the position $P_1$ shown in Fig. 5 and the gripper 12 moves to a position in which the workpiece 1 should be placed as shown in Fig. 4. Then, the arithmetic and logical unit 24 produces a command to let the gripper 12 release the workpiece 1 and place same in a position indicated by the teaching operation.

The operation shifts to step S10 in which the value of the pointer is altered to one which indicates the address No. 2 of the area 26 where data for calculating a next operation target position or the second set of teaching data $x_2$ and $y_2$ is stored. Then, in step S11, it is judged by the arithmetic and logical unit 24 whether or not the one cycle of operations being performed is finished or whether the data are those stored at No. 11

0154226

of the area 26. With the one cycle of operations not being finished, the operation returns to step S7.

In step S7, data for calculating a next operation position or the second set of teaching data $(x_2, y_2)$ is fed from the address No. 2 of the area 26 indicated by the pointer to the arithmetic and logical unit 24. Then, the operation shifts to step S8 in which the arithmetic and logical unit 24 does calculation on $x_2$ and $y_2$ to convert the coordinates $(x_2, y_2)$ to cylindrical coordinates in the same manner as described by referring to the equations (3) and (4). The coordinates $(\gamma_2, \theta_2)$ obtained in this way represent an operation target value or an operation target position corresponding to a position $P_2$.

The operation shifts to step S9 in which the arithmetic and logical unit 24 produces instructions to cause the gripper 12 to grip a workpiece 2 and rotate the rotating portion 14 through a rotational angle which has the value $\alpha$ while driving the cylinder 22 in a stroke which has the value $\ell$, to rotate the rotating portions 20 and 16 through a rotational angle which has the value $\theta_2$ and to drive the cylinder 18 in a stroke such that the total length of the cylinder 18 has a value $\gamma_1$. Thus, the rotating portion 16 of the arm member 11 moves to the position P2 shown in Fig. 5, and the gripper 12 moves to a position in which the workpiece should be placed as shown in Fig. 4. Then, the arithmetic and logical unit 24 produces a command to let the gripper 12 release the workpiece 2 and place same in a position indicated by the teaching operation.

The operation shifts to step S10 in which the pointer has its value altered to one which indicates the address No. 3. Then, the operation shifts to step S11 in which it is judged whether or not the one cycle of operations is finished. With the one cycle of operations not being finished, the operation returns to step S7. The series of operations described hereinabove is repeatedly performed through steps S7 to S11 until a workpiece 10 is placed in a position indicated by the teaching operation.

In the teaching playback system of the prior art constructed and operating as described hereinabove, it is necessary to store information in a memory on ten (10) postures of the arm member 11 with respect to the positions in which ten (10) workpieces 1-10 are to be placed, and it is particularly necessary to teach the rotational angle of the rotating portion 20 and the stroke of the cylinder 18 and store these values in the memory. Stated differently, it is necessary to perform ten (10) teaching operations to correspond to the number of workpieces to be handled. Thus the teaching and playback system of the prior art has suffered the disadvantage that it is time-consuming to perform one cycle of operations and difficulties are experienced in improving operation efficiency. This phenomenon becomes marked as the number of times the workpieces are transported increases.

In this type of teaching playback system, the number of teaching operations to be performed or the number of operation targets for performing playback operations which involves the most important function of the system is decided by dividing the capacity of a memory area for the teaching data in the memory by the number of units of data in the memory used for performing one teaching operation. However, since the number of units of data in the memory used for performing one teaching operation is great, limitations are placed on the number of operation targets by the capacity of the memory 25, making it impossible to improve the work storing function of the teaching playback system.

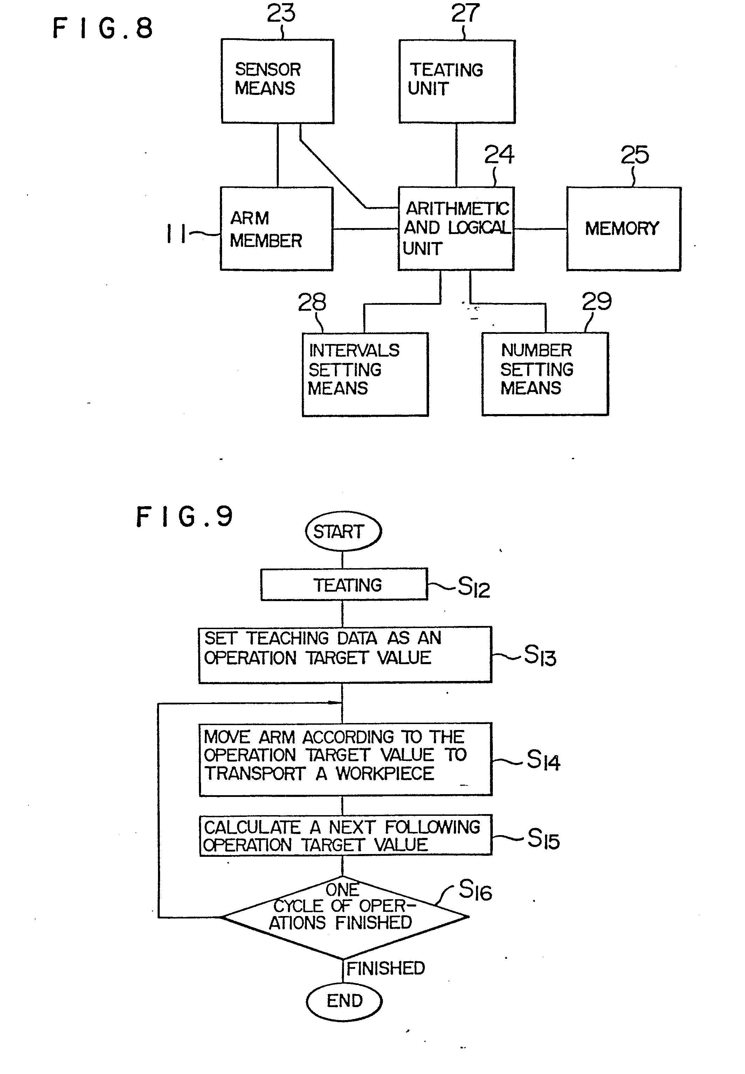

The invention has been diveloped for the purpose of obviating the aforesaid problems of the prior art. One embodiment of the invention will now be described by referring to Fig. 8 which is a block diagram of the control mechanism and Fig. 9 which is a flow chart of control procedures performed by the control mechanism shown in Fig. 8. The arm member shown in this embodiment is constructed as described by referring to the arm member 11 shown in Fig. 1.

In the embodiment shown in Fig. 8, the control mechanism connected to the arm member 11 comprises, in addition to the sensor means 27, arithmetic and logical unit 24 and memory 25, intervals setting means 28 connected to the arithmetic and logical unit 24 for setting a spacing interval between one operation target position of the arm member and another operation target position thereof, and number setting means 29 connected to the arithmetic and logical unit for setting the number of operations repeatedly performed by the arm member. The intervals setting means 28 and number setting means 29 may be constituted as a microcomputer.

One cycle of operations performed by the embodiment of the teaching playback system constructed as described hereinabove in conformity with the invention will now be described by referring to Fig. 9.

Before the operations commence, the intervals at which the workpieces 1-10 are to be set as shown in Fig. 4 or the spacing intervals (i = 2 to 10) between a position $P_i$ and a position $P_{i-1}$ shown in Fig. 5 are set as $(\Delta x_i - x_i - x_{i-1}, \Delta y_i - y_i - y_{i-1})$ in the x - y coordinate system by the intervals setting means 28. In this case, $y_{i-1} = y_i$ in Fig. 5, so that $\Delta y_i = o$. If the workpieces 1-10 are to be placed equidistantly from each other, then $\Delta x_i = x_i - x_{i-1} = x_2 - x_1 = \Delta x$. Thus, $(\Delta x_i = x_2 - x_i = \Delta x, 0)$ is set, for example, by the intervals setting means 28. Ten (10) operations including operation No. 1 to operation No. 10 are set by the number setting means 29 as being repeatedly performed in one cycle of operations.

After the intervals $(\Delta x, 0)$ are set by the intervals setting means 28 and the ten (10) operations to be repeatedly performed are set by the number setting means 29, the arm member 11 is moved to a position in which the workpiece 1 is to be placed as shown in Fig. 4 while no workpiece is gripped, for example, in step S12. More specifically, the arm member 11 is moved in such a manner that the rotating portion 16 moves to the position $P_1$ as shown in Fig. 5. Thereafter, the teaching unit 27 is actuated to output a teaching signal to the arithmetic and logical unit 24. Based on this teaching signal, data in the aforesaid condition including the teaching data or the rotational angles of the rotating portions 14, 16 and 20 and the strokes of the cylinders 18 and 22 are sensed by the sensor means 23.

The operation shifts to step S13 in which the teaching data of the data obtained in step S12 or the rotational angle of the rotating portion 20 and the stroke of the cylinder 18 are calculated by the arithmetic and logical unit 24, and the results are stored in the memory 25. Other data or the rotational angle of the rotating portion 14 and the stroke of the cylinder 22 are stored in an area separate from the area in which the aforesaid teaching data are stored. In this case, the position $P_1$ of the rotating portion 16 shown in Fig. 5 is designated by the coordinates $(x_1, y_1)$ as described by referring to the prior art, and the rotational angle of the rotating portion 20 with respect to the x-axis and the total length of the cylinder 18 obtained by its stroke are denoted by $\theta_1$ and $\gamma_i$ respectively, so that the relation $x_1 - \gamma_1 \cos \theta_1$, $y_1 = \tan \theta_1$ holds. Thus,

calculation is done by the arithmetic and logical unit 24 on $x_1$ and $y_1$ based on the rotational angle $\theta_1$ of the rotating portion 20 and the total length $\gamma_1$ of the cylinder 18 obtained from its stroke.  The coodinates $(x_1, y_1)$ obtained in this way represents the position Pl.

Of other data, the rotational angle of the rotating portion 14 and the stroke of the cylinder 22 are constant at all times when the operations of placing the workpieces 1-10 are performed.  Thus, the rotational angle and stroke are stored as $\alpha$ and $\ell$, for example. With regard to the rotational angle of the rotating portion 16, an angle formed by a shaft extending through the center of the rotating portion 16 and located paralled to the x-axis and the cylinder 18 may be considered to be the rotational angle of interest.  Since such angle is equal to the angle formed by the cylinder 18 with respect to the x-axis at all times, it may be considered to be contained in a first set of teaching data, so that there is no need to store the rotational angle of the rotating portion 16 in the memory 25.

When the teaching operation is finished, the operation shifts to step S14 in which the values of $(x_1, y_1)$ stored in the memory 25 are fed into the arithmetic and logical unit 24 which does calculation on $\gamma_1 = \sqrt{x_1^2 + y_1^2}$ and $\theta_1 = \alpha\gamma c \tan y_1/x_1$ to convert the x − y coordinate system to the cylindrical coordinate system.  The coordinates $(\gamma_1, \theta_1)$ obtained in this way represents an operation target value or an operation target position corresponding to the position $P_1$. The arithmetic and logical unit 24 gives instructions so that the gripper 12 of the arm member 11 grips the workpiece 1 while the rotational angle of the rotating portion 14 has the aforesaid value $\alpha$, the stroke of the cylinder 22 has the value $\ell$, the rotational angles of the rotating portions 20 and 16 have the value $\theta_1$ and the total length of the cylinder 18 has the value $\gamma_1$. As a result, the rotating portion 16 of the arm member 11 moves to the position $P_1$ shown in Fig. 5 and the gripper 12 moves to a position in which the workpiece 1 is to be placed as shown in Fig. 4. Then, the arithmetic and logical unit 24 gives a command to let the gripper 12 release the workpiece 1 to place same in the position taught by the teaching operation.

The operation shifts to step S15 in which the values of $(x_1, y_1)$ stored in the memory 25 and the value of $\Delta x$ and 0 stored by the intervals setting menas 28 are fed into the arithmetic and logical unit 24 where calculation is done by subsituting $x_1 - \Delta x$ and $y_1$ for the $x_2$ and $y_2$ in the equations $\gamma_2 = \sqrt{x_2^2 + y_2^2}$ and $\theta_2 = \alpha\gamma c \tan y_2/x_2$, respectively, or calculation is done on the equations $\gamma_2 = \sqrt{(x_1 - \Delta x)^2 + y_1^2}$ and $\theta_2 = \alpha\gamma c \tan y_1(x_1 - \Delta x)$. The coordinates $(\gamma_2, \theta_2)$ obtained by the calculation represents an operation target value or an operation target position corresponding to the position $P_2$.

The operation shifts to step S16 in which it is judged by the arithmetic and logical unit 24 whether or not the one cycle of operation is finished or the number of operations finished (which is one in this case) coincides with the number ten (10) of operations set by the number setting means 29. Since the two numbers do not coincide with each other, the operation returns to step S14.

In step S14, the rotational angle $\alpha$ of the rotating portion 14 and the stroke $\ell$ of the cylinder 22 stored in the memory 25 are fed into the arithmetic and logical unit 24 which outputs as command values the values of $\alpha$ and $\ell$ referred to hereinabove and the values of strokes corresponding to the values of $(\theta_2, \gamma_2)$ set in step S15. As a result, the gripper 12 of the arm member 11 grips a workpiece 2, and the rotational angle of the rotating portion 14, the stroke of the cylinder 22 and the rotational angles of the rotating portions have values corresponding to $\alpha$, $\ell$ and $\theta_2$, respectively, while the cylinder 22 operates so that its total length has a value corresponding to $\gamma_2$. Thus, the rotating portion 16 of the arm member 11 moves to the position $P_2$ shown in Fig. 5, and the gripper 12 moves to a position in which the workpiece 2 is to be placed as shown in Fig. 4. Then, the arithmetic and logical unit 24 gives a command to let the gripper 12 release the workpiece 2 to place same in the predetermined target position.

The operation shifts to step S15 in which calculation is done by the arithmetic and logical unit 24 to place a workpiece 3 in a predetermined position in the same manner as described by referring to the workpiece 2. More specifically, $x_1 - 2\Delta x$ and $y_1$ are substituted for the $x_3$ and $y_3$ in the equations $\gamma_3 = \sqrt{x_3{}^2 + y_3{}^2}$ and $\theta_3 = \alpha\gamma c \tan y_3/x_3$, respectively, by multiplying $\Delta x$ by two because a second operation is going to be performed, and calculation is done on the equations $\gamma_3 = \sqrt{(x_1 - 2\Delta x)^2 + y_1{}^2}$ and $\theta_2 = \alpha\gamma c \tan y_1/(x_1 - 2\Delta x)$. Then, the operation shifts to step S16 in which it is judged by the arithmetic and logical unit 24 whether or not the one cycle of operation is finished in accordance with the number of operations set by the number setting means 29. Since the one cycle of operations is not finished yet, the operations returns to step S14.

Similar operations are performed repeated until the workpiece 10 has been placed in a predetermined position.

In the embodiment of the invention constructed and operating as described hereinabove, the teaching operation has only to be performed with respect to the workpiece 1 which is moved and placed in the predtermined position first of all the workpieces, and the rest of the workpieces 2-10 can be moved and placed in the respective predetermined positions by calculation done by the arithmetic and logical unit 24 on the teaching data obtained by the teaching operation performed with regared to the workpiece 1 and the intervals set by the intervals setting means 28, without requiring to repeatedly perform the teaching operation. The operations of moving the workpieces are terminated when the number of times the workpiece moving operations are repeatedly performed coincides with the number of operations set by the number setting means. By virtue of these features, the invention makes it possible to positively perform one cycle of operations and to reduce the period of time necessary for performing the one cycle of operations.

The data stored in the memory 25 are only those which are obtained when a teaching operation is performed with regard to the workpiece 1 moved and placed in the predetermined position first of all the workpieces to be handled. This reduces the number of units of data that should be stored in the memory, thereby eliminating the need to increase the capacity of the memory, obviating the disadvantage of the prior art that limitations are placed on the number of operation targets by the memory capacity.

In the embodiment shown and described hereinabove, the workpieces 1-10 have been described as being placed equidistantly along the x-axis of the coordinate system. When the workpieces 1-10 are to be placed in positions located at different intervals, the operations have only to be modifies as follows. When it is desired to place the workpieces 1-10 at different intervals in the direction of the x-axis, for example, the intervals setting means 29 sets, as described hereinabove, the intervals between the positions $P_i$ and $P_{i-1}$ (i = 2 to 10) shown in Fig. 5 as ($\Delta x_i = x_i - x_{i-1}$, $\Delta y_i = y_i - y_{i-1}$) in the x - y coordinate system. Since $y_{i-1} = y_i$, $\Delta y = 0$. After all, the intervals setting means 28 sets the intervals as ($\Delta x_i = x_i - x_{i-1}$, 0) (i = 2 to 10). Stated differently, the intervals setting means 28 sets $\Delta x_2$ to $\Delta x_{10}$ corresponding to the operation target positions of the second operation and operations following the second operation repeatedly performed for the number of times of 2 to 10. In step S15 shown in Fig. 9 in which calculation is done to obtain the operation target positions for the second and following operations, the values of $x_1$ and $y_1$ stored in the memory 25 and the values of $\Delta x_2$ to $\Delta x_i$ of all the values $\Delta x_2$ to $\Delta x_{10}$ set by the intervals setting means 29 that correspond to the operation target position of the operation to be performed at that time and the operation target position of the operation performed previously, respectively, are fed into the arithmetic and logical unit 24 in which the value of the total sum of $\Delta x_2$ to $\Delta x_i$ or the value of $\Delta x_2 + \Delta x_3 + ... + \Delta x_i$ is obtained and calculation is done by substituting $x_1 - (\Delta x_2 + ... \Delta x_i)$ and $y_1$ for the $x_i$ and $y_i$, respectively, in the equations $\gamma_i = \sqrt{x_i^2 + y_i^2}$ and $\theta_i = \alpha\gamma c\ \tan y_i/x_i$ or calculation is done on the following equations:

$$\gamma_i = \sqrt{\{x_1 - (x_2 + ... + x_i\}^2 + y_1^2}$$

$$\theta_i = \alpha\gamma c\ \tan y_1/x_1 - (\Delta x_2 + ... + \Delta x_i)$$

The coordinates $(\gamma_i, \theta_i)$ obtained in this way correspond to the operation target position of the ith operation. By performing the aforesaid operations, it is possible to place the workpieces 1 to 10 along the x-axis at different intervals.

In the modification of the embodiment described hereinabove, it is possible to place the workpieces 1 to 10 equidistantly along the x-axis if $\Delta x_2$ to $\Delta x_{10}$ are considered to have the same value $\Delta x$.

In the embodiment and its modification shown and described hereinabove, the workpieces 1 to 10 have been descrived as being placed along the x-axis of the x - y coordinate system equidistantly from each other or at different spacing intervals. However, the invention is not limited to the specific direction of array of the workpieces and the workpieces 1 to 10 may be placed along the y-axis of the x - y coordinate system. It is also possible to move the workpieces 1 to 10 in directions which include a combination of the directions described hereinabove. The positions in which the workpieces 1 to 10 are placed are disposed on a stationary table. However the workpieces 1 to 10 may be placed on a moving table, such as a conveyor belt. By moving a table along the x-axis of the x - y coordinate system while moving a forward end portions of the arm member 11 along the y-axis for example, it is possible to move and place the workpieces in a complicate pattern by moving the arm member in a simple operation.

In the embodiment shown and described hereinabove, the arm member constitutes a cylindrical cooditate system. However, the invention is not limited to this specific type of arm member, and the invention may be incorporated in any other type of arm member, such as an arm member of the multiple joint type, that constitutes another coordinate system. When the invention is incorporated in this type of arm member, the arithmetic and logical unit 24 would do calculation on suitable coordinate system conversion equations.

In the embodiment shown and described hereinabove, the intervals setting means 28 and number setting means 29 have each been described as being one in number. However, these means 28 and 29 may each be plural in number and suitable intervals and number may be selected by the arithmetic and logical unit 24. When this construction is adopted, the operations performed by the arm member are not restricted to those which merely involve a repetition of the same operation but the arm member can perform a complicated pattern of operations including a repetition of the same operation.

As described hereinabove, the teaching playback system according to the invention comprises an arm member having at least one movable portion for handling workpieces or articles to be moved and placed in predtermined positions, sensor means for sensing the amount of work done by the movable portion, an arithmetic and logical unit for performing a predetermined operation

- 26 - 0154226

based on the amount of work sensed by the sensor means, and a teaching unit connected to the arithmetic and logical unit and teaching same to perform the sensing of the amount of work done by the movable portion, the operation of the arm member being continued in accordance with the amount of work done by the movable portion when teaching is performed by the teaching unit, wherein the improvement comprises intervals setting meand connected to the arithmetic and logical unit for setting a spacing interval between one operation target position of the arm and another operation target position thereof, and number setting means connected to the arithmetic and logical unit for setting the number of operations repeatedly performed by the arm member, said arithmetic and logical unit being operative when taught by the teaching unit to calculate and operation target position besed on the amount of work done by the movable portion of the arm member and a spacing interval set by the intervals setting means, whereby the movable portion can be actuated based on the operation target position to cause the arm member to perform operations repeatedly a number of times set by the number setting means. By virtue of the constituent features of the invention, only one teaching operation with regard to the first workpiece has only to be performed, thereby achieving the following results:

(1)     The period of time required for performing one cycle of operations is much shorter in the present invention than in the prior art, thereby enabling operation efficiency to be improved;

0154226

(2)      The limitations placed on the operation targets placed by the memory capacity in the prior art are removed in the system according to the invention. Stated differently, the number of teachings that can be stored in the memory is functionally infinite, thereby enabling the operations storing function of the system to be greatly improved; and

(3)      The capacity of the memory can be greatly reduced, and circuits constituting the memory can be simplified, thereby reducing costs, improving reliability and enabling an overall compact size to be obtained in a teaching playback system by using simplified circuitry.

WHAT IS CLAIMED IS:

1.      A teaching playback system comprising:

an arm member having at least one movable portion for handling workpieces or articles to be moved and placed in predetermined positions;

sensor means for sensing the amount of work done by the movable portion;

an arithmetic and logical unit for performing a predetermined operation based on the amount of work sensed by the sensor means; and

a teaching unit connected to the arithmetic and logical unit and teaching same to perform the sensing of the amount of work done by the movable portion, the operation of the arm member being continued in accordance with the amount of work done by the movable portion when teaching is performed by the teaching unit;

wherein the improvement comprises:

intervals setting means connected to the arithmetic and logical unit for setting a spacing interval between one operation target position of the arm member and another operation target position thereof; and

number setting means connected to the arithmetic and logical unit for setting the number of operations performed repeatedly by the arm member, said arithmetic and logical unit being operative, when taught by the teaching unit, to calculate an operation target position based on the amount of work done by the movable portion of the arm member and a spacing interval set by the intervals setting means, whereby the movable portion can be actuated based on the operation target position to cause the arm member to perform operations repeatedly a number of times set by the number setting means.

2.    A teaching playback system as claimed in claim 1, wherein said arithmetic and logical unit calculates a first operation target position of the arm member based on the amount of work done by the movable portion of the arm member when teaching is performed by the teaching unit, and calculates each of the second and the following operation target positions based on the amount of work done and a spacing interval set by the intervals setting means.

3.    A teaching playback system as claimed in claim 1 or 2, wherein said intervals setting means sets a spacing interval between one operation target position of said arm member and another operation target position thereof by using an interval $\Delta x$ in the direction of the x-axis and an interval $\Delta y$ in the direction of the y-axis in the x - y coordinate system.

4.    A teaching playback system as claimed in claim 3, wherein at least the value of $\Delta x$ set by the intervals setting means is constant in value, and said arithmetic and logical unit does calculation, when it calculates any one of the operation target positions of the arm member for the second and following operations, on the position in the direction of x-axis by using a value obtained by multiplying the value of $\Delta x$ by a number

obtained by adding one to an operation number for which the operation target position is to be determined, whereby the operation target positions can be equidistantly spaced spart from each other in the x-axis direction.

5.       A teaching playback system as claimed in claim 3, wherein the values of $\Delta x$ corresponding to the operation target positions of the arm member for all the operations following the second operation are stored beforehand in the intervals setting means, and said arithmetic and logical unit does calculation, when it calculates any one of the operation target positions of the arm member for the operations following the second operation, on the position in the direction of the x-axis by using the total sum of the values of $\Delta x$ corresponding to an operation for which the operation target position is to be calculated and the preceding operation or operations for which the operation target position or positions have been calculated.

6.       A teaching playback system as claimed in claim 5, wherein the same value is set for $\Delta x$ for all the operations in the intervals setting means, whereby said operation target positions can be arrayed equidistantly in the x-axis direction.

7.       A teaching playback system as claimed in claim 5, wherein different values are set for $\Delta x$ for all the operations in the intervals setting means, whereby said operation target positions can be arrayed at different intervals from each other in the direction of the x-axis.

0154226

# F I G. I

FIG.2

FIG.3

FIG.4

## FIG.5

## FIG.6 PRIOR ART

# FIG.7a PRIOR ART

# FIG.7b PRIOR ART

**START**

$S_1$ — INITIAL SETTING OF POINTER OF TEACHING DATA MEMORY AREA (SET AT No. I)

$S_2$ — TEACHING

$S_3$ — STORE TAUGHT DATA AT AN ADDRESS INDICATED BY THE POINTER

$S_4$ — ALTER THE VALUE OF POINTER

$S_5$ — TEACHING CONTINUED ? — CONTINUED / TERMINATED

$S_6$ — REPEAT INITIAL SETTING OF POINTER

$S_7$ — READ DATA FROM THE ADDRESS INDICATED BY THE POINTER

$S_8$ — SET THE DATA AS OPERATION TARGET VALUES

$S_9$ — MOVE ARM ACCORDING TO THE OPERATION TARGET VALUES TO TRANSPORT WORKPIECES

$S_{10}$ — ALTER THE VALUE OF POINTER

$S_{11}$ — ONE CYCLE OF OPERATIONS FINISHED ? — FINISHED

**END**

## FIG.7b

| ADDRESS | |
|---------|---|
| No. I | FIRST TEACHING DATA |
| No. 2 | SECOND TEACHING DATA |
| No. 3 | THIRD TEACHING DATA |
| No. 4 | FOURTH TEACHING DATA |
| No. 5 | FIFTH TEACHING DATA |
| No. 6 | SIXTH TEACHING DATA |
| No. 7 | SEVENTH TEACHING DATA |
| No. 8 | EIGHTH TEACHING DATA |
| No. 9 | NINTH TEACHING DATA |
| No. 10 | TENTH TEACHING DATA |
| No. II | ELEVENTH TEACHING DATA |

0154226

F I G. 8

| 23 | 27 |
|---|---|
| SENSOR MEANS | TEATING UNIT |

11 — ARM MEMBER

24 — ARITHMETIC AND LOGICAL UNIT

25 — MEMORY

| 28 | 29 |
|---|---|
| INTERVALS SETTING MEANS | NUMBER SETTING MEANS |

F I G. 9

START

TEATING ~S12

SET TEACHING DATA AS AN OPERATION TARGET VALUE ~S13

MOVE ARM ACCORDING TO THE OPERATION TARGET VALUE TO TRANSPORT A WORKPIECE ~S14

CALCULATE A NEXT FOLLOWING OPERATION TARGET VALUE ~S15

ONE CYCLE OF OPER- ATIONS FINISHED ~S16

FINISHED

END

## DOCUMENTS CONSIDERED TO BE RELEVANT

| Category | Citation of document with indication, where appropriate, of relevant passages | Relevant to claim | CLASSIFICATION OF THE APPLICATION (Int Cl 4) |
|---|---|---|---|
| A | DE - A1 - 2 312 796 (TOKYO SHI-BAURA) <br> * Claims * | 1-7 | B 25 J 9/16 |
| A | DE - B2 - 2 461 842 (KAWASAKI HEAVY IND.) <br> * Totality * | 1-7 | |
| A | DE - A1 - 2 840 341 (UNIMATION) <br> * Claims; fig. (pos.no. 54) * | 1-7 | |
| A | DE - A1 - 3 243 341 (TOKICO) <br> * Fig. 7; claims * | | |
| P,A | EP - A1 - 0 114 362 (HITACHI) <br> * Claims; fig. 2,3 * | 1-7 | TECHNICAL FIELDS SEARCHED (Int Cl 4) <br> B 25 J 9/00 |
| A | US - A - 4 011 437 (R.E. HOHN) <br> * Fig. 1-6,9-11 * | 1-7 | |

The present search report has been drawn up for all claims

| Place of search | Date of completion of the search | Examiner |
|---|---|---|
| VIENNA | 30-04-1985 | BAUMANN |